# EUROPEAN PATENT APPLICATION

(11) **EP 4 759 711 A1**
(43) Date of publication of application: **17.06.2026**
(21) Application number: 25223046.1
(22) Date of filing: 12.12.2025
(51) Int. Cl.: B64D 11/00, B60R 11/02

(54) **PERSONAL ELECTRONIC DEVICE HOLDER AND CHARGER**

(30) Priority: 12.12.2024 US 202418978384
(71) Applicant: Elevate Aircraft Seating LLC, Bothell, WA 98011 (US)
(72) Inventor: WISNIEWSKI, Max Zenon, BOTHELL, 98011 (US)
(74) Representative: Arnold & Siedsma

(57) **Abstract**

A passenger suite for an aircraft is disclosed. The passenger suite includes an aircraft seat and a personal electronic device (PED) holder positioned at an eye level of a passenger seated in the aircraft seat. The PED holder includes a frame mounted to a seatback shell of another passenger suite positioned forward of the aircraft seat. The PED also includes a vertical planar surface within the frame. The PED holder also includes a movable bar that is movable relative to the frame and a bias acting on the movable bar urges the movable bar towards the frame. The PED holder also includes a wireless charger embedded in the vertical planar surface.

## Description

### BACKGROUND INFORMATION

### Field:

The present disclosure relates generally to a passenger suite of an aircraft. More specifically, the present disclosure relates to a personal electronic device (PED) holder and charger of a passenger suite of an aircraft.

### Background:

Current layout of passenger suite designs for aircraft may provide a personal electronic device (PED) holder. The typical PED holder secures a PED of a passenger within a seatback or seatback shell of a passenger suite positioned near the passenger with the PED. The holder positions the PED for convenient interaction while secured. If the passenger also desired to charge the PED, a power cord is required to be plugged in between the PED and a power outlet or the passenger can move the PED to a wireless charging pad located elsewhere within the passenger suite. Often, if a wireless charging pad is offered, it is positioned within a hidden cubby or storage area. It is inconvenient for the passenger to have to choose between securely holding the PED and wireless charging the PED.

Therefore, it would be desirable to have a method and apparatus that takes into account at least some of the issues discussed above, as well as other possible issues.

### SUMMARY

An illustrative embodiment of the present disclosure provides a personal electronic device (PED) holder for an aircraft seat. The PED holder includes a vertical planar surface surrounded by a frame and a movable bar having a bias towards the frame. The vertical planar surface faces the aircraft seat. The movable bar includes a leading edge that has an angled surface. The bias clamps a PED between the movable bar and the frame. The angled surface urges the PED against the vertical planar surface.

Another illustrative embodiment of the present disclosure provides a passenger suite for an aircraft. The passenger suite includes an aircraft seat and a personal electronic device (PED) holder positioned at an eye level of a passenger seated in the aircraft seat. The PED holder includes a frame mounted to a seatback shell of another passenger suite positioned forward of the aircraft seat. The PED holder also includes a vertical planar surface seated within the frame. The PED holder also includes a movable bar that is movable relative to the frame. A bias acting on the movable bar urges the movable bar towards the frame. The PED holder also includes a wireless charger embedded in the vertical planar surface.

A further illustrative embodiment of the present disclosure provides a method for holding a personal electronic device (PED) in a passenger suite of an aircraft. A movable bar is slid against a bias to open a compartment within a frame, the frame is mounted to a seatback shell of another passenger suite positioned forward of the passenger suite. A PED is placed against a vertical planar surface surrounded by the frame. The movable bar is released such that the bias clamps the PED between the movable bar and the frame.

The features and functions can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the illustrative embodiments are set forth in the appended claims. The illustrative embodiments, however, as well as a preferred mode of use, further objectives and features thereof, will best be understood by reference to the following detailed description of an illustrative embodiment of the present disclosure when read in conjunction with the accompanying drawings, wherein:
Figure 1 is an illustration of a block diagram of a platform in accordance with an illustrative embodiment;
Figure 2 is an illustration of a passenger suite with a personal electronic device (PED) holder in accordance with an illustrative embodiment;
Figure 3 is an illustration of a front view of a personal electronic device (PED) holder in accordance with an illustrative embodiment;
Figure 4 is an illustration of a perspective rear view of a personal electronic device (PED) holder in accordance with an illustrative embodiment;
Figure 5 is an illustration of a cut-away view of a personal electronic device (PED) holder along lines 5-5 of Figure 4 in accordance with an illustrative embodiment;
Figure 6 is an illustration of a flowchart of a process for holding a personal electronic device (PED) in a passenger suite of an aircraft in accordance with an illustrative embodiment;
Figure 7 is an illustration of a block diagram of an aircraft manufacturing and service method in accordance with an illustrative embodiment; and
Figure 8 is an illustration of a block diagram of an aircraft in which an illustrative embodiment may be implemented.

### DETAILED DESCRIPTION

The illustrative embodiments recognize and take into account one or more different considerations. For example, the illustrative embodiments recognize and take into account that passenger suite layouts for commercial aircraft, particularly business class seats and up, provide secure holders for passenger's personal electronic devices (PED) such as mobile phones and/or tablets.

The illustrative embodiments also recognize and take into account that often passengers use the PED holder to secure their PED while viewing and interacting with their PED while seated in an aircraft seat.

The illustrative embodiments also recognize and take into account that often passengers also require charging their PED and would like to continue to interact with their PED while charging.

The illustrative embodiments also recognize and take into account that passengers typically have to choose between a corded recharge or moving their PED to an often hidden or tucked away compartment to utilize any available wireless charging point.

Thus, the illustrative embodiments provide a PED holder capable of providing a secure position that is easily accessible for interaction and also provides simultaneous wireless charging.

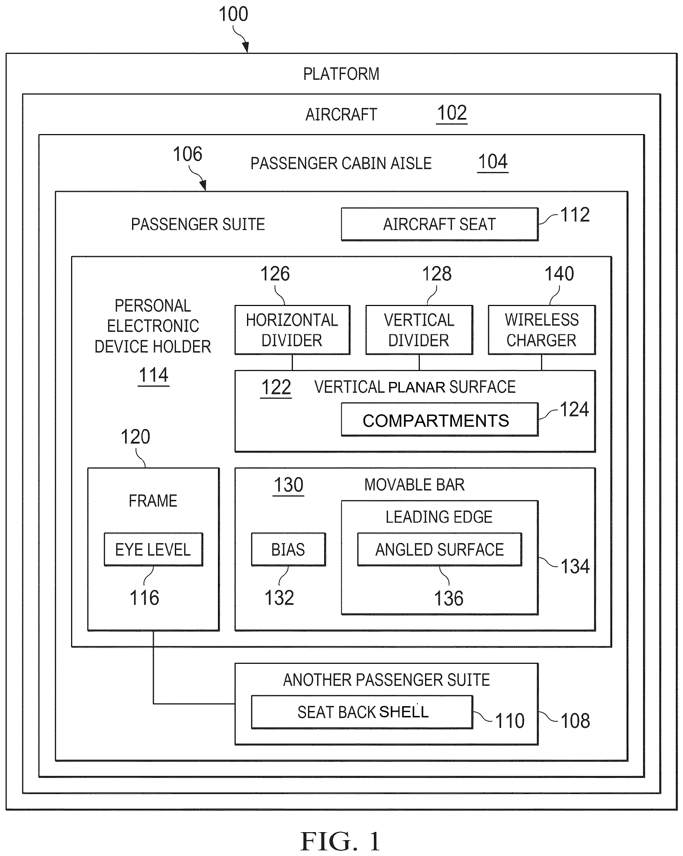

With reference now to the figures and, in particular, with reference to Figure 1, an illustration of a block diagram of a platform is depicted in accordance with an illustrative example. Platform 100 has aircraft 102 in this illustrative example.

The illustration of aircraft 102 in Figure 1 is not meant to imply physical or architectural limitations to the manner in which an illustrative example may be implemented. For example, although aircraft 102 may be a commercial aircraft, aircraft 102 may be a military aircraft, a rotorcraft, a helicopter, an unmanned aerial vehicle, or any other suitable aircraft that includes an armrest assembly.

Although the illustrative examples are described with respect to an aircraft, the illustrative example may be applied to other types of platforms. The platform may be, for example, a mobile platform, a stationary platform, a land-based structure, an aquatic-based structure, or a space-based structure. More specifically, the platform may be an aircraft, a surface ship, a tank, a personnel carrier, a train, a spacecraft, a space station, a satellite, a submarine, an automobile, a power plant, a bridge, a dam, a house, a manufacturing facility, a building, a tool, a mechanical structure, or some other suitable platform or structure where an armrest assembly is desirable.

In this illustrative example, platform 100 takes the form of aircraft 102. In this illustrative example, when platform 100 takes the form of aircraft 102, aircraft 102 includes passenger cabin aisle 104. Passenger cabin aisle 104 typically runs longitudinal along the length of aircraft 102 and leads to at least one passenger suite 106. Passenger cabin aisle 104 typically connects several passenger suites, including at least passenger suite 106 and another passenger suite 108. Another passenger suite 108 includes seatback shell 110. In this illustrative example, another passenger suite 108 is positioned forward of passenger suite 106. In other words, a passenger seated in passenger suite 106 faces and has a view of seatback shell 110 of another passenger suite 108.

As used herein, a first component "connected to" or "coupled to" or "associated with" a second component means that the first component can be connected directly or indirectly to the second component. The connection is a physical association. In other words, additional components may be present between the first component and the second component. The first component is considered to be indirectly connected to the second component when one or more additional components are present between the two components. When the first component is directly connected to the second component, no additional components are present between the two components.

For example, a first component can be considered to be physically connected to a second component by at least one of being secured to the second component, bonded to the second component, mounted to the second component, welded to the second component, fastened to the second component, or connected to the second component in some other suitable manner. The first component also can be connected to the second component using a third component. The first component can also be considered to be physically connected to the second component by being formed as part of the second component, an extension of the second component, or both.

Passenger suite 106 includes aircraft seat 112 and personal electronic device (PED) holder 114. PED holder 114 is designed to hold and securely mount a PED (for example, a mobile phone, tablet, etc.) to a structure positioned in front of a passenger seated in aircraft seat 112. PED holder 114 will position a PED at eye level of the passenger and within a distance such that the passenger seated in aircraft seat 112 may comfortably interact with the secured PED. In this illustrative example, the structure PED holder 114 is mounted to seatback shell 110 of another passenger suite 108 positioned forward of aircraft seat 112 or passenger suite 106. It is understood that if passenger suite 106 is the most forward passenger suite in passenger cabin aisle 104 of aircraft 102, PED holder 114 may just as easily be mounted to a bulkhead or other aircraft cabin divider.

PED holder 114 includes frame 120 surrounding vertical planar surface 122. Frame 120 is mounted to seatback shell 110 of another passenger suite 108 positioned forward of aircraft seat 112 or passenger suite 106 at eye level 116. Eye level 116 is understood to be any height relative to a passenger seated in aircraft seat 112 that is comfortable to view and to interact with.

Vertical planar surface 122 is separated into compartments 124 by horizontal divider 126, vertical divider 128, and movable bar 130. Vertical planar surface 122 is generally flat without any curvature. The overall size of frame 120 which surrounds vertical planar surface 122 may vary as well as the positions of vertical divider 128 and horizontal divider 126. Typically, compartments 124 are sized to accommodate a PED, various sized literature, and any other passenger items such as sunglasses, writing implements, headphone cases, etc.

Movable bar 130 is movable relative to frame 120. Bias 132 acts on movable bar 130 to urge movable bar 130 towards frame 120. A direction of bias 132 and a direction movable bar 130 moves relative to frame 120 is parallel with a plane of vertical planar surface 122. As a result, movable bar may move generally horizontally or generally vertically along a plane that is parallel with the plane of vertical planar surface 122. Movable bar 130 has leading edge 134. Leading edge 134 is the front edge of movable bar 130 as movable bar 130 moves toward frame 120. Bias 132 urges leading edge 134 of movable bar 130 towards frame 120. Leading edge 134 includes angled surface 136. Angled surface 136 is oriented such that leading edge 134 urges a PED towards vertical planar surface 122. In other words, the slant of angled surface 136 wedges a PED that abuts leading edge 134 against vertical planar surface 122.

A portion of vertical planar surface 122 is dedicated to wireless charger 140. A compartment of compartments 124 of vertical planar surface 122 created by movable bar 130 and frame 120 includes wireless charger 140. In other words, a compartment formed by movable bar 130 and frame 120 contains a contact point of wireless charger 140.

In use, a passenger seated in aircraft seat 112 may use PED holder 114 to securely position a PED at level for comfortable viewing and interaction while the PED is also wirelessly charging. The passenger moves movable bar 130 against bias 132 such that a space between movable bar 130 and frame 120 is sufficient to place a PED between them. The passenger then allows bias 132 to move movable bar 130 towards frame 120 and against the PED to clamp the PED between movable bar 130 and frame 120. Angled surface 136 of leading edge 134 of movable bar 130 urges the PED against vertical planar surface 122 and wireless charger 140 where wireless charger 140 can then wirelessly charge the PED while the passenger interacts with the PED.

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combination of these items can be present. In some illustrative examples, "at least one of" can be, for example, without limitation, two of item A; one of item B; and ten of item C; four of item B and seven of item C; or other suitable combinations.

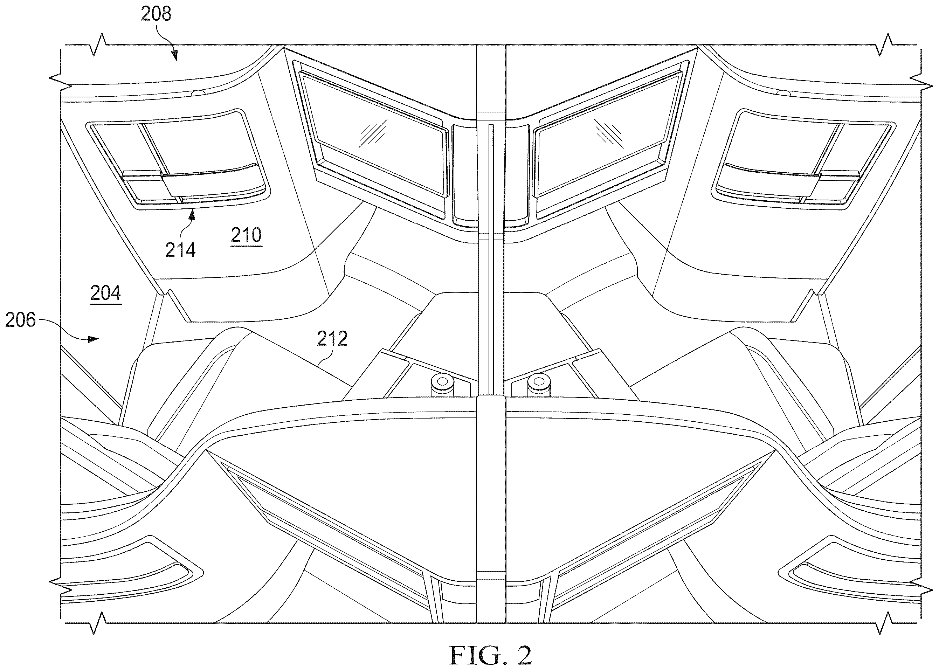

With reference next to Figure 2, an illustration of a passenger suite with a PED holder is depicted in accordance with an illustrative example. In this illustrative example and the illustrative examples that follow, the same reference numeral, increased by 100, may be used in more than one figure. This reuse of a reference numeral in different figures represents the same element in the different figures. The components illustrated in Figure 2 are examples of physical implementations of passenger suite 106, another passenger suite 108, and PED holder 114 shown in block form in Figure 1.

As illustrated passenger suite 206 includes aircraft seat 212 and PED holder 214. PED holder 214 is mounted to seatback shell 210 of passenger suite 208 positioned forward of passenger suite 206. It is understood that if passenger suite 206 is the forward most passenger suite along passenger cabin aisle 204, PED holder 214 may be mounted to a bulkhead or other aircraft cabin divider positioned forward of passenger suite 206. It is also understood that a passenger suite may include more than one aircraft seat and PED holder combination.

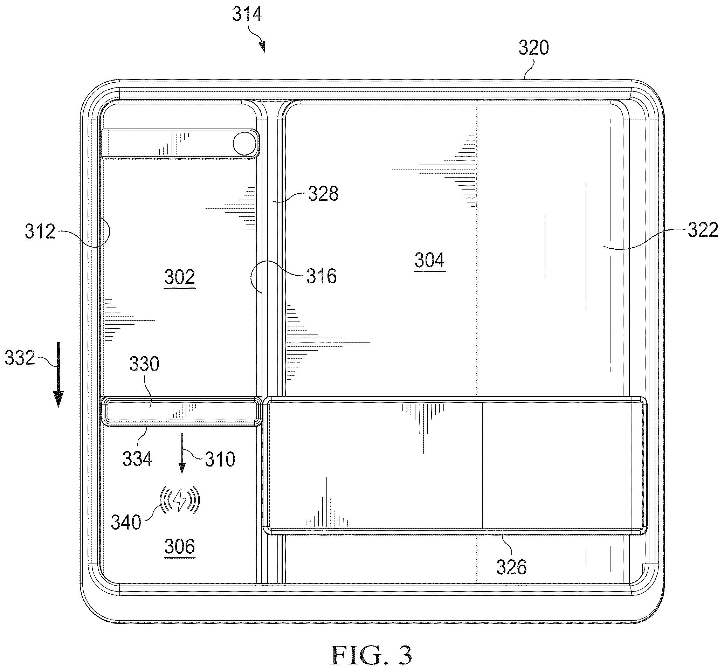

With reference next to Figure 3, an illustration of a PED holder is depicted in accordance with an illustrative example. The components illustrated in Figure 3 are examples of physical implementations of PED holder 114 shown in block form in Figure 1.

PED holder 314 includes frame 320 surrounding vertical planar surface 322. Frame 320 is mounted to a seatback shell of another passenger suite or a bulk head positioned forward of the passenger suite the PED is serving. Frame 320 is mounted at eye level for the passenger sitting in the passenger suite the PED is serving.

Vertical planar surface 322 is separated into compartments, for example, compartment 302, compartment 304, and compartment 306 by frame 320, horizontal divider 326, vertical divider 328, and movable bar 330. Compartment 302 is bounded by frame 320, vertical divider 328, and movable bar 330. Compartment 304 is bounded by frame 320, vertical divider 328, and horizontal divider 326. Compartment 306 is bounded by frame 320, vertical divider 328 and movable bar 330. Horizontal divider 326 is spaced from vertical planar surface 322 which allows flat items such as literature to be stored behind horizontal divider 326 and in front of vertical planar surface 322.

Vertical planar surface 322 is generally flat without any curvature. The overall size and shape of frame 320 which surrounds vertical planar surface 322 may vary as well as the positions of vertical divider 328 and horizontal divider 326 relative to frame 320.

Movable bar 330 is movable relative to frame 320. Bias 332 acts on movable bar 330 to urge movable bar 330 towards frame 320 in direction 310. Although movable bar 330 and bias 332 are illustrated as vertically oriented in direction 310, other directions are possible as long as bias 332 urges movable bar 330 towards frame 320 or a divider.

Movable bar 330 has leading edge 334. Leading edge 334 is the front edge of movable bar 330 as movable bar 330 moves toward frame 320. Bias 332 urges leading edge 334 of movable bar 330 towards frame 320. Movable bar 330 includes legs that extend through slots 312 and 316. Slot 312 and slot 316 are parallel and dictate direction 310. Slot 312 and slot 316 are formed in vertical planar surface 322 such that legs of movable bar 330 extend through slot 312 and slot 316 to engage a carriage on the rear side of vertical planar surface 322.

A portion of vertical planar surface 322 is dedicated to wireless charger 340. In this illustrative example, compartment 306 includes wireless charger 340. In other words, compartment 306 is formed by movable bar 330, vertical divider 328, and frame 320 contains a contact point of wireless charger 340. A PED clamped between movable bar 330 and frame 320 positioned in compartment 306 will engage wireless charger 340 to be wirelessly charged while also being positioned at eye level of a passenger such that the passenger can interact with the PED while it is wirelessly charging.

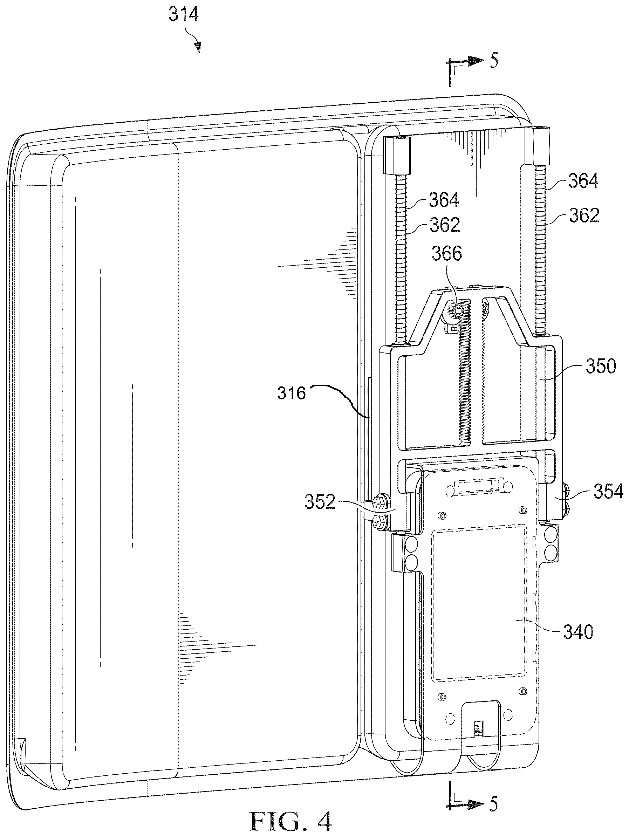

With reference next to Figure 4, an illustration of a rear view of a PED holder is depicted in accordance with an illustrative example. The components illustrated in Figure 4 are examples of physical implementations of PED holder 114 shown in block form in Figure 1.

As illustrated, the rear side of PED holder 314 includes wireless charger 340 and carriage 350. Carriage 350 is connected to leg 352 and leg 354 of movable bar 330. Leg 352 and leg 354 extend through slot 316 and 312, respectively, from the front side of PED holder 314 to the rear side of PED holder 314. Leg 352 and leg 354 each extend through vertical planar surface 322. Carriage 350 rides on rods 362. Coil springs 364 wrap rods 362 and abut carriage 350. In this illustrative example, coil springs 364 provide bias 332 as a non-limiting example. Other forms of bias are acceptable. Movement of carriage 350, thus movement of movable bar 330, is damped by damper 366. In this illustrative example, damper 366 is a rotary damper as a non-limiting example. Other forms of damper are acceptable.

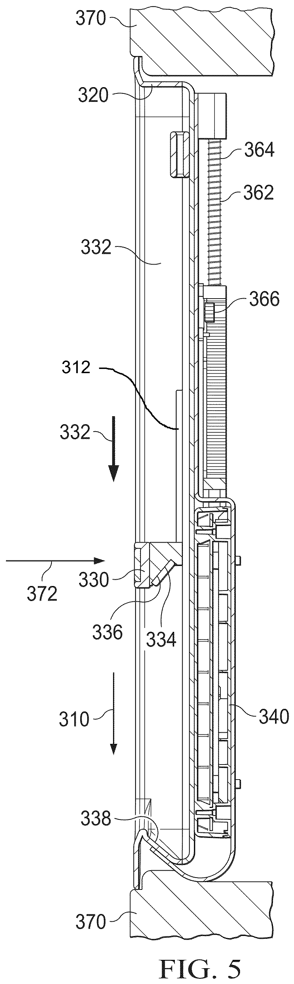

With reference next to Figure 5, an illustration of a cut-away view of a PED holder along lines 5-5 of Figure 4 is depicted in accordance with an illustrative example. The components illustrated in Figure 5 are examples of physical implementations of PED holder 114 shown in block form in Figure 1.

Frame 320 and vertical planar surface 322 are recessed from into seatback shell 370. Frame 320 is mounted to seatback shell 370. Seatback shell 370 is structure of a passenger suite positioned forward of the passenger suite utilizing PED holder 314. Movable bar 330 includes leading edge 334. Leading edge 334 has angled surface 336. Angled surface 336 is oriented such that leading edge 334 urges a PED in direction 372 towards vertical planar surface 322. Frame 320 includes angled surface 338. Angled surface 338 is oriented such that frame 320 urges a PED in direction 372 towards vertical planar surface 322. In other words, the slant of angled surface 336 and angled surface 338 wedges a PED that abuts leading edge 334 and/or frame 320 against vertical planar surface 322. Bias 332 is parallel to a plane of vertical planar surface 322.

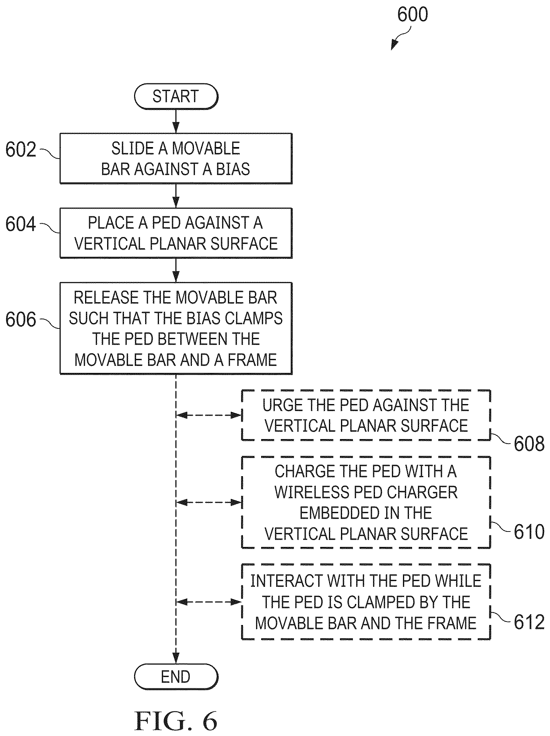

With reference next to Figure 6, an illustration of a flowchart of a process 600 for holding a personal electronic device (PED) in a passenger suite of an aircraft is depicted in accordance with an illustrative example. The method depicted in Figure 6 may be used in conjunction with the passenger suite and PED holder depicted in Figures 1-5.

The process begins by sliding a movable bar against a bias (operation 602). The movable bar is slid against the bias to open a compartment within a frame. The frame is mounted to a seatback shell of another passenger suite positioned forward of the passenger suite. The opened compartment is sized to accept a PED within. The process continues by placing a PED against a vertical planar surface surrounded by the frame (operation 604). At operation 606, the movable bar is released such that the bias clamps the PED between the movable bar and the frame. At operation 608, the PED is urged against the vertical planar surface with an angled edge of the movable bar. At operation 610, the PED is wirelessly charged with a wireless PED charger embedded in the vertical planar surface. At operation 612, the PED is interacted with while the PED is clamped in the frame and wirelessly charging. The process ends thereafter.

In some alternative implementations of an illustrative example, the function or functions noted in the blocks may not be necessary or may occur out of the order noted in the figures. For example, in some cases, two blocks shown in succession may be performed substantially concurrently, or the blocks may sometimes be performed in the reverse order, depending upon the functionality involved. Also, other blocks may be added in addition to the illustrated blocks in a flowchart or block diagram.

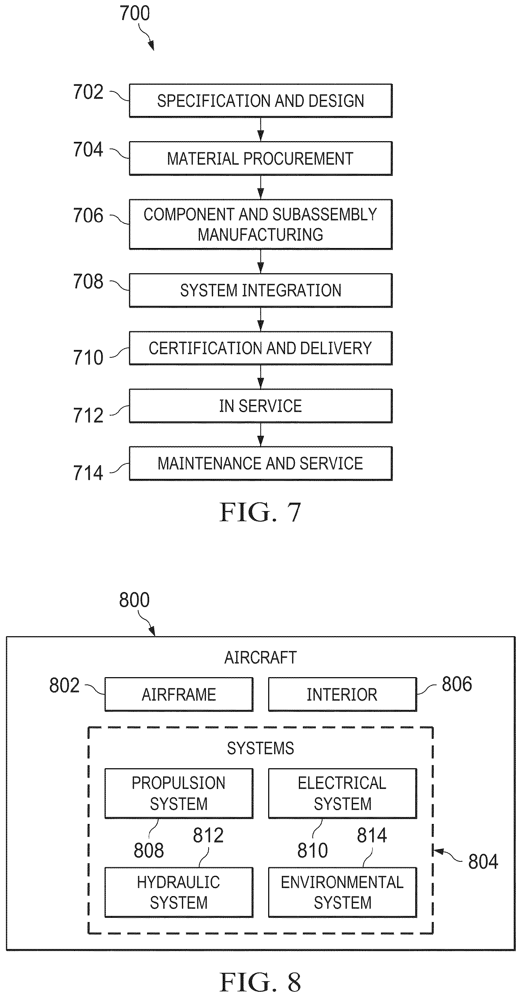

The illustrative embodiments of the disclosure may be further described in the context of aircraft manufacturing and service method 700 as shown in Figure 7 and aircraft 800 as shown in Figure 8. Turning first to Figure 7, an illustration of a block diagram of an aircraft manufacturing and service method is depicted in accordance with an illustrative embodiment. During pre-production, aircraft manufacturing and service method 700 may include specification and design 702 of aircraft 800 in Figure 8 and material procurement 704.

During production, component and subassembly manufacturing 706 and system integration 708 of aircraft 800 in Figure 8 takes place. Thereafter, aircraft 800 in Figure 8 may go through certification and delivery 710 in order to be placed in service 712. While in service 712 by a customer, aircraft 800 in Figure 8 is scheduled for routine maintenance and service 714, which may include modification, reconfiguration, refurbishment, and other maintenance, service, or inspection.

The apparatus of this disclosure may be installed on an aircraft during component and subassembly manufacturing 706. In addition, the apparatus of this disclosure may be retrofitted onto aircraft 800 in Figure 8 during routine maintenance and service 714 as part of a modification, reconfiguration, or refurbishment of aircraft 800 in Figure 8.

Each of the processes of aircraft manufacturing and service method 700 may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers, and an operator may be an airline, a leasing company, a military entity, a service organization, and so on.

With reference now to Figure 8, an illustration of a block diagram of an aircraft is depicted in which an illustrative embodiment may be implemented. In this example, aircraft 800 is produced by aircraft manufacturing and service method 700 in Figure 7 and may include airframe 802 with plurality of systems 804 and interior 806. Examples of systems 804 include one or more of propulsion system 808, electrical system 810, hydraulic system 812, and environmental system 814. Any number of other systems may be included. Although an aerospace example is shown, different illustrative embodiments may be applied to other industries, such as the automotive industry.

Apparatuses and methods embodied herein may be employed during at least one of the stages of aircraft manufacturing and service method 700 in Figure 7. In one illustrative example, components or subassemblies produced in component and subassembly manufacturing 706 in Figure 7 may be fabricated or manufactured in a manner similar to components or subassemblies produced while aircraft 800 is in service 712 in Figure 7. As yet another example, one or more apparatus embodiments, method embodiments, or a combination thereof may be utilized during production stages, such as component and subassembly manufacturing 706 and system integration 708 in Figure 7. One or more apparatus embodiments, method embodiments, or a combination thereof may be utilized while aircraft 800 is in service 712, during maintenance and service 714, inclusive of inspection, in Figure 7, or both. The use of a number of the different illustrative embodiments may substantially expedite the assembly of aircraft 800, reduce the cost of aircraft 800, or both expedite the assembly of aircraft 800 and reduce the cost of aircraft 800.

Further, the disclosure comprises embodiments according to the following clauses:
Clause 1. A personal electronic device (PED) holder for an aircraft seat, comprising:
   a vertical planar surface surrounded by a frame, the vertical planar surface facing the aircraft seat,
   a movable bar having a bias towards the frame; and
   a leading edge of the movable bar having an angled surface;
   wherein the bias clamps a PED between the movable bar and the frame and the angled surface urges the PED against the vertical planar surface.
Clause 2. The PED holder of clause 1, wherein the vertical planar surface and the frame are recessed into a seatback shell of a passenger suite positioned in front of the aircraft seat.
Clause 3. The PED holder of clause 1, wherein the vertical planar surface is separated into compartments by the movable bar and a vertical divider.
Clause 4. The PED holder of clause 1, wherein the vertical planar surface includes a wireless PED charger.
Clause 5. The PED holder of clause 1, wherein the frame is positioned vertically at eye level of a passenger seated in the aircraft seat.
Clause 6. The PED holder of clause 1, wherein the frame extends toward the aircraft seat from a seatback shell of a passenger suite positioned in front of the aircraft seat.
Clause 7. The PED holder of clause 1, wherein the vertical planar surface is separated into compartments by a vertical divider extending from the vertical planar surface and further comprising a horizontal divider extending from the frame to the vertical divider.
Clause 8. The PED holder of clause 1, wherein the vertical planar surface is separated into compartments by a vertical divider extending between opposing edges of the frame and further comprising a horizontal divider extending from the frame to the vertical divider, the horizontal divider spaced from the vertical planar surface.
Clause 9. A passenger suite for an aircraft, comprising:
   an aircraft seat; and
   a personal electronic device (PED) holder positioned at an eye level of a passenger seated in the aircraft seat, wherein the personal electronic device (PED) holder comprises:
      a frame mounted to a seatback shell of another passenger suite positioned forward of the aircraft seat;
      a vertical planar surface seated within the frame;
      a movable bar movable relative to the frame;
      a bias acting on the movable bar urging the movable bar towards the frame; and
      a wireless PED charger embedded in the vertical planar surface.
Clause 10. The passenger suite of clause 9, wherein a leading edge of the movable bar includes an angled surface.
Clause 11. The passenger suite of clause 10, wherein the bias clamps a PED between the movable bar and the frame and the angled surface urges the PED against the vertical planar surface.
Clause 12. The passenger suite of clause 9, wherein the vertical planar surface and the frame are recessed into the seatback shell.
Clause 13. The passenger suite of clause 9, wherein the frame extends toward the aircraft seat from the seatback shell.
Clause 14. The passenger suite of clause 9, wherein the vertical planar surface is separated into compartments by the movable bar and a vertical divider.
Clause 15. The passenger suite of clause 9, wherein the vertical planar surface is separated into compartments by a vertical divider extending between opposing edges of the frame and further comprising a horizontal divider extending from the frame to the vertical divider, the horizontal divider spaced from the vertical planar surface.
Clause 16. The passenger suite of clause 9, wherein a direction of the bias is parallel with a plane of the vertical planar surface.
Clause 17. A method for holding a personal electronic device (PED) in a passenger suite of an aircraft, comprising:
   sliding a movable bar against a bias to open a compartment within a frame mounted to a seatback shell of another passenger suite positioned forward of the passenger suite;
   placing a PED against a vertical planar surface surrounded by the frame; and
   releasing the movable bar such that the bias clamps the PED between the movable bar and the frame.
Clause 18. The method of clause 17, further comprising:
   urging the PED against the vertical planar surface with an angled surface of the movable bar.
Clause 19. The method of clause 17, further comprising:
   charging the PED with a wireless PED charger embedded in the vertical planar surface.
Clause 20. The method of clause 19, wherein the frame is positioned vertically at eye level of a passenger seated in the passenger suite, further comprising:
   interacting with the PED while the PED is clamped in the frame and wirelessly charging.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other desirable embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A personal electronic device (PED) holder for an aircraft seat, comprising:
a vertical planar surface surrounded by a frame, the vertical planar surface facing the aircraft seat,
a movable bar having a bias towards the frame; and
a leading edge of the movable bar having an angled surface;
wherein the bias clamps a PED between the movable bar and the frame and the angled surface urges the PED against the vertical planar surface.

2. The PED holder of claim 1, wherein the vertical planar surface and the frame are recessed into a seatback shell of a passenger suite positioned in front of the aircraft seat.

3. The PED holder of claim 1 or 2, wherein the vertical planar surface includes a wireless PED charger.

4. The PED holder of any one of the preceding claims, wherein the frame is positioned vertically at eye level of a passenger seated in the aircraft seat.

5. The PED holder of any one of the preceding claims, wherein the frame extends toward the aircraft seat from a seatback shell of a passenger suite positioned in front of the aircraft seat.

6. The PED holder of any one of the preceding claims, wherein the vertical planar surface is separated into compartments by the movable bar and a vertical divider.

7. The PED holder of claim 6, wherein the vertical divider extends from the vertical planar surface, and further comprising a horizontal divider extending from the frame to the vertical divider.

8. The PED holder of claim 7, wherein the vertical divider extends between opposing edges of the frame and wherein the horizontal divider is spaced from the vertical planar surface.

9. The PED holder of any one of the preceding claims, wherein a direction of the bias is parallel with a plane of the vertical planar surface.

10. A passenger suite for an aircraft, comprising an aircraft seat and a personal electronic device (PED) holder as claimed in any one of the preceding claims.

11. A method for holding a personal electronic device (PED) in a passenger suite of an aircraft, comprising:
sliding a movable bar against a bias to open a compartment within a frame mounted to a seatback shell of another passenger suite positioned forward of the passenger suite;
placing a PED against a vertical planar surface surrounded by the frame; and
releasing the movable bar such that the bias clamps the PED between the movable bar and the frame.

12. The method of claim 11, further comprising:
urging the PED against the vertical planar surface with an angled surface of the movable bar.

13. The method of claim 11 or 12, further comprising:
charging the PED with a wireless PED charger embedded in the vertical planar surface.

14. The method of any one of claims 11-13, wherein the frame is positioned vertically at eye level of a passenger seated in the passenger suite, further comprising:
interacting with the PED while the PED is clamped in the frame and wirelessly charging.
